# FASCICULE DE BREVET EUROPEEN

(11) **EP 0 750 072 B1**
(45) Date de publication et mention de la délivrance du brevet: **28.03.2001**
(21) Numéro de dépôt: 96470014.0
(22) Date de dépôt: 19.06.1996
(51) Int. Cl.: E01H 1/08, E01H 1/05, E01H 1/00, B62D 7/14, B62D 13/04

(54) **Balayeuse urbaine automobile compacte et performante à turbine montée en position inversée**
Selbstfahrende kompakte Hochleistungsstadtkehrmaschine mit umgekehrt montierter Turbine
High performance compact automotive urban sweeper with inverse mounted turbine

(30) Priorité: 19.06.1995 FR 9507455; 25.01.1996 FR 9601106
(43) Date de publication de la demande: 27.12.1996
(73) Titulaire: Mathieu Yno, 54202 Toul Cédex (FR)
(72) Inventeur: Jungo, Nicolas, 54200 Bicqueley (FR)
(74) Mandataire: Poupon, Michel

(56) Documents cités:
- EP-A- 0 285 289
- EP-A- 0 621 376
- DE-A- 2 242 718
- DE-A- 3 909 852
- DE-B- 1 261 405
- DE-C- 516 128
- FR-A- 2 171 110
- FR-A- 2 626 911
- GB-A- 2 244 748
- PATENT ABSTRACTS OF JAPAN vol. 13, no. 528 (M-898), 24 Novembre 1989 & JP-A-01 215675 (MAZDA MOTOR CORP.), 29 Août 1989,

## Description

La présente invention concerne une balayeuse urbaine automobile perfectionnée particulièrement compacte et performante, par optimisation de l'ensemble des différents éléments structurels de celle-ci à savoir le système d'aspiration, le système de roues directrices, les moyens de réglage de l'inclinaison des balais à brosse rotative et enfin la structure du châssis.

Plus particulièrement, l'invention concerne un dispositif d'aspiration pour balayeuse urbaine automobile et plus particulièrement un perfectionnement au dispositif décrit dans le brevet FR 88 01484 ; elle concerne également les balayeuses équipées du dispositif.

Une balayeuse décrite dans le brevet ci-dessus est constituée d'un châssis, d'une cabine de conduite, d'une benne de collecte des déchets fixée au châssis et d'une turbine d'aspiration d'axe vertical fixée sur le dessus du plafond mobile de la benne de collecte. Ledit plafond mobile portant la turbine est relié élastiquement à la benne par un couvre joint élastique.

Cette construction a permis d'améliorer considérablement la stabilité et l'insonorisation du véhicule.

Cependant on a observé dans le temps un écrasement du joint élastique entourant le plafond mobile, une transmission des vibrations à la benne de collecte et une utilisation insuffisante du volume à disposition.

Afin de conserver tous les avantages de la construction antérieure tout en supprimant l'inconvénient précité, la demanderesse a eu l'idée d'inverser la position de la turbine.

Le but de l'invention et de proposer un dispositif qui conserve tous les avantages de la construction antérieure de la balayeuse du brevet FR 88 01484 et qui utilise les avantages de la turbine inversée.

La position inversée de la turbine permet de surélever le niveau d'aspiration pour diminuer le volume perdu au-dessus de la cuve, d'augmenter le volume d'aspiration pour diminuer la résistance de l'air.

EP 0 621 376 A décrit une balayeuse urbaine automobile ayant les caractéristiques du préambule de la revendication 1.

L'invention consiste en une balayeuse urbaine automobile avec dispositif d'aspiration selon les caractéristiques de la revendication 1.

Avantageusement, on pourra prévoir que la surface perforée est une grille caractérisée en ce qu'elle est positionnée parallèlement au plafond mobile de manière à créer un volume d'aspiration, en ce que la profondeur du logement est telle que la face d'aspiration de la turbine est sensiblement dans le même plan que la grille, et en ce qu'un joint réalise l'étanchéité entre la face d'aspiration de la turbine et la périphérie du logement.

Selon un mode de réalisation, l'invention concerne également un dispositif à roues directrices pour balayeuse et un véhicule équipé du dispositif.

A l'heure actuelle il existe deux types distincts de dispositifs à roues directrices pour véhicules de voirie.

Selon un premier type, le système de direction des quatre roues est totalement hydraulique. Les deux essieux sont pilotés chacun par un ou plusieurs vérins. Le système a l'avantage d'être simple et de ne pas nécessiter de place entre les essieux. Son inconvénient majeur est que l'un des essieux doit obligatoirement pouvoir être bloqué en position droite pour rouler sur route ouverte à la circulation. Le moyen de blocage de l'essieu peut poser des problèmes de fiabilité et des problèmes de sécurité quand il n'est pas constamment utilisé.

En effet dans ce type de dispositif entièrement hydraulique, l'absence de liaison mécanique entre les deux essieux rend très difficile le contrôle de l'alignement des essieux.

En outre, en raison des fuites hydrauliques le véhicule peut très vite avoir un défaut d'alignement, ce qui peut provoquer de graves accidents ou le cas échéant être très désagréable.

Selon le deuxième type de dispositif à quatre roues directrices, il existe une liaison mécanique entre les roues directrices du véhicule de voirie (balayeuse).

Ce système présente l'avantage de pouvoir être utilisé sur voie ouverte à la circulation automobile mais son inconvénient majeur réside dans le fait qu'un seul essieu peut être suspendu.

En effet, le système de renvoi prévu sur cette machine ne permet pas d'absorber le mouvement des deux essieux.

Comme la suspension à lame provoque un mouvement de l'essieu dans la direction longitudinale, il faut que le moyen de renvoi puisse absorber ce mouvement sans le transmettre au deuxième essieu, sinon dès que la route devient irrégulière, le véhicule devient très vite dangereux et inconduisible, surtout dans le cas d'une structure compacte.

Le premier problème à résoudre est de réaliser un dispositif à quatre roues directrices dont les deux essieux sont suspendus sans que le véhicule devienne instable et dangereux.

Un deuxième problème est de concevoir un véhicule pouvant rouler sur route ouverte tout en utilisant en toute sécurité le dispositif à quatre roues directrices.

Un troisième problème réside dans les faibles dimensions du châssis d'un véhicule de voirie qui ne permettent pas l'utilisation des systèmes à quatre roues directrices connus à ce jour pour les véhicules routiers. Ce problème n'a pas encore été résolu à ce jour avec un dispositif mécanique.

Tous ces problèmes sont résolus selon l'une des caractéristiques de mise en oeuvre d'un mode particulier d'exécution de l'invention qui consiste en un dispositif à roues directrices pour véhicule de voirie comportant un essieu avant portant deux roues reliées par une barre de direction et un essieu arrière portant deux roues, reliées par une barre de direction, caractérisé en ce qu'il comporte une barre de renvoi transmettant le mouvement de braquage d'une roue avant à une pièce de renvoi montée à rotation sous un longeron du châssis situé sur le côté opposé du véhicule par rapport à ladite roue avant, une barre de liaison transmettant le mouvement à une autre pièce de renvoi montée à rotation sous un autre longeron du châssis situé de l'autre côté du véhicule par rapport au premier longeron, une barre de renvoi transmettant le mouvement du renvoi à la roue arrière située du côté opposé du véhicule par rapport au deuxième longeron.

Par ailleurs, dans un mode particulier d'exécution l'invention concerne également un dispositif de réglage de l'inclinaison de balais à brosse rotative d'axe vertical pour une balayeuse automobile, elle concerne également les balayeuses équipées du dispositif.

Généralement les balayeuses automobiles urbaines ou industrielles comportent latéralement deux balais à brosse rotative d'axe vertical ou réglable autour de la verticale, chaque balai étant par exemple relié à la partie avant du véhicule au moyen d'un support formé de deux bras articulés autour d'un axe d'articulation vertical.

A l'heure actuelle, il est connu de régler l'inclinaison de l'axe des brosses rotatives au niveau de leur assiette, c'est à dire au moyen de dispositifs prévus sur cet axe, ceci permet de s'adapter à la déclivité de la surface balayée.

Le dispositif présente cependant un inconvénient important.

Lors du déplacement de la balayeuse, le balai rencontre des obstacles qui tendent à rapprocher plus ou moins la brosse de la balayeuse grâce au support articulé. Lors de ce déplacement, l'angle d'inclinaison de la brosse varie et le réglage initial réalisé avant le départ n'est plus valable.

Pour y remédier, la demanderesse a eu l'idée d'installer un dispositif de réglage d'inclinaison non plus sur l'axe de la brosse mais sur l'axe d'articulation des deux bras du support.

Deux variantes de réalisation sont prévues mais ce nombre n'est pas limitatif.

Selon la variante préférée non limitative, l'invention préférentiellement constituée d'un dispositif caractérisé en ce qu'il est composé d'une part d'un palier à deux rotules portant l'axe de pivotement, la rotule inférieure étant solidarisée au bras lié au châssis, la rotule supérieure étant portée par un système à deux bras perpendiculaires fixés au châssis et réglables en longueur.

Préférentiellement, les bras réglables sont des vérins.

La balayeuse est constituée principalement d'un châssis, d'une cabine de conduite, d'une cuve de collecte des déchets fixée au dessus du châssis, d'une turbine d'aspiration reliée à un tube d'aspiration traversant le châssis et débouchant au dessus de la chaussée derrière deux balais rotatifs.

Dans les balayeuses actuelles, le moteur est placé entre les deux essieux et il est impossible de réaliser un châssis rectiligne tout en conservant les caractéristiques actuelles suivants : tubes d'aspiration de diamètre 250, diamètre extérieur de braquage de 5000, diamètre de roue de 650 mm, empattement de plus de 2000 pour une bonne stabilité.

Le braquage des roues provoque un déplacement de celles-ci en direction du châssis, ce qui peut limiter le rayon de braquage en raison de leur diamètre et de leur angle de braquage.

L'objectif de l'invention sur cet aspect est de réaliser un châssis rectiligne tout en conservant les caractéristiques antérieures, dans le but de simplifier les pièces, de diminuer les coûts de construction et de coopérer à la structure compacte de l'ensemble.

Ce but a été atteint en allant à l'encontre des idées reçues et en plaçant le moteur en élévation au-dessus de l'essieu arrière.

Selon cette caractéristique on propose une balayeuse urbaine automobile du type constitué principalement d'un châssis, d'une cabine de conduite, d'une cuve de collecte des déchets fixée au châssis, d'une turbine d'aspiration, d'un moteur, caractérisée en ce que d'une part le châssis est formé de deux tubes rectilignes et d'autre part en ce que le moteur est fixé au-dessus de l'essieu arrière.

Préférentiellement, le moteur est fixé en trois points sur ce châssis rectiligne.

On comprendra mieux un mode particulier d'exécution de l'invention à l'aide de la description qui suite faite en référence aux figures annexées suivantes :
- **figure 1** : vue en coupe verticale d'une première variante de réalisation d'une balayeuse selon l'invention,
- **figure 2** : vue de dessus de la turbine de la figure 1,
- **figure 3** : vue en coupe verticale d'une deuxième variante de réalisation,
- **figure 4** : vue de dessus de la turbine de la figure 3,
- **figure 5** : vue de dessous d'une variante de mise en oeuvre au niveau du dispositif de roues directrices, en position braquée,
- **figure 6** : vue de l'avant d'une balayeuse équipée de deux balais, selon une troisième variante de mise en oeuvre de l'invention, représentant l'ensemble des balais, le système de bras support et les roues avant de la balayeuse,
- **figure 7** : vue latérale d'un balai de la figure 6 et de son système de bras support,
- **figure 8** : vue de dessus des éléments de la figure 6 avec les balais en position repliée,
- **figure 9** : vue de dessus d'un balai en position dépliée, conforme à la figure 8,
- **figure 10** : vue générale d'un châssis d'une quatrième variante de mise en oeuvre de l'invention,
- **figure 11** : vue du châssis de la figure 10 et des principaux organes moteurs de la balayeuse comportant ledit châssis.

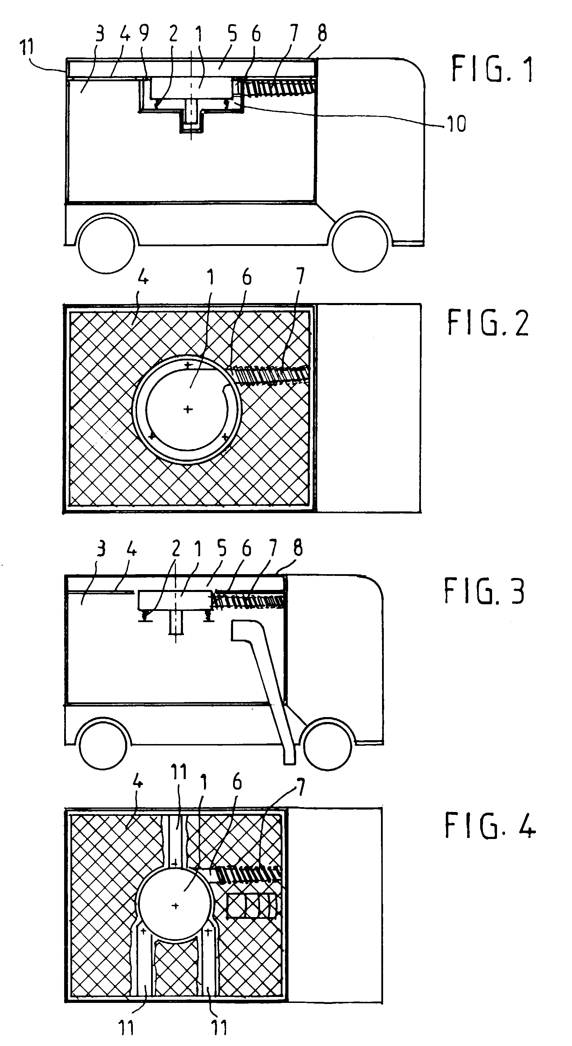

On se reporte d'abord aux figures 1 et 2 correspondant à une première variante de balayeuse comportant une cuve à déchets (3) et une turbine à axe vertical (1).

Conformément à celle-ci, la turbine (1) est inversée et encastrée dans une grille (4) de la cuve (3) comportant un logement de turbine (10) dans lequel la turbine est montée sur trois paliers hydrauliques (2) arrêtant les vibrations. De préférence, la grille de filtration (4) est solidarisée au plafond mobile (8) par tout moyen (9).

Le positionnement de la turbine est tel que la surface d'aspiration de la turbine (1) est préférentiellement sensiblement dans le plan de la grille (4) ou dans un plan inférieur au plan de la grille.

Cette disposition permet d'une part d'abaisser l'entrée de la turbine, augmentant ainsi le volume d'aspiration (5) disponible entre ladite turbine et le plafond mobile (8) du véhicule pour une résistance minimale d'aspiration, et d'autre part de conserver un seuil de remplissage (4) très haut pour un volume de remplissage maximum.

Dans cette variante un joint circulaire (9) entoure la turbine, la relie à la périphérie du logement, et empêche le dépôt de poussières fines entre le logement (10) et la turbine (1).

Par ailleurs, l'étanchéité réalisée à la sortie soufflante (6) de la turbine grâce à un tuyau flexible (7) supprime la transmission des vibrations au réservoir (3) et la pression sur le joint d'étanchéité.

Selon un autre mode d'exécution de l'invention, représentée sur les figures 3 et 4 les trois paliers hydrauliques (2) sont portés par trois supports (11) fixés à la cuve (3).

Le joint (9) est supprimé, les autres éléments étant inchangés.

Bien entendu la grille peut être remplacée par toute autre surface perforée.

Les avantages de l'invention sont importants et sont notamment les suivants, malgré la structure compacte de la balayeuse :
- augmentation du volume d'aspiration
- efficacité de l'aspiration
- diminution des vibrations.

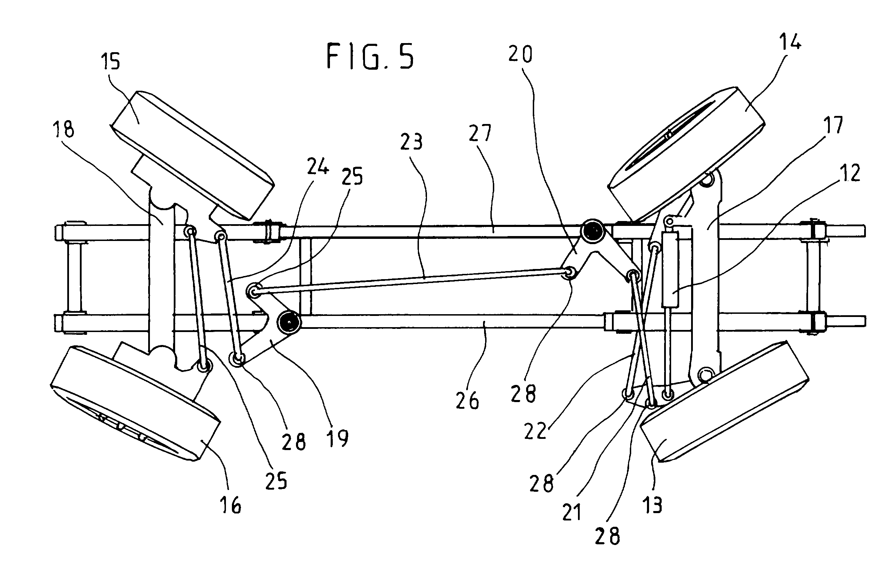

On se réfère maintenant à la figure 5.

Dans cette variante, un premier essieu (17) comporte deux roues (13) et (14), la position de braquage étant donnée par une liaison mécanique ou hydraulique (12) sur un pivot de la roue (13).

Le mouvement de braquage est retransmis d'une part par une barre de direction (22) à la roue (14) ainsi que par une barre de renvoi (21) à un renvoi (20) en forme de L monté à rotation sous un longeron (27) du châssis à proximité de la roue opposée (14).

Le renvoi (20) renvoie le mouvement par une barre de liaison (13) sur un renvoi (19) en forme de L monté à rotation sous le longeron opposé (26) du châssis à une distance prédéterminée d'une roue (16). Le renvoi (19) entraîne une barre de renvoi (24) liée à une roue (15) et détermine la position de ladite roue (15). Cette roue (15) à son tour renvoie le mouvement par une barre de direction (25) à la roue (16). La fonction des renvois (19,20) est d'absorber le mouvement longitudinal de l'essieu (17 ou 18) placé à proximité, chacun des deux essieux étant suspendu par un moyen approprié de type connu.

Toutes les barres sont montées sur des pivots (28) pour rattraper les variations d'angle d'attaque pendant les mouvements des pièces.

Les barres de direction (22,25) reliant entre elles les roues d'un même essieu sont connues.

Les barres de renvoi (21,24) sont placées perpendiculairement au mouvement engendré par les essieux, ce qui enlève toute influence des mouvements de suspension sur la direction, et elles restent sensiblement parallèles aux essieux pendant le mouvement des pièces.

Les avantages de l'invention sont nombreux et sont notamment les suivants :
- utilisation permanente, y compris sur route ouverte, en mode quatre roues directrices sans compromettre la sécurité,
- sécurité et facilité d'utilisation,
- coût peu élevé,
- simplicité, facilité d'entretien, fiabilité,
- confort amélioré,
- sécurité accrue à vitesse maximale,
- meilleure fiabilité et longévité grâce au châssis complètement suspendu,
- diminution de retransmission de vibrations de roulement,
- angle de braquage important malgré la faible largeur (1,20 m) du châssis, cet angle est de l'ordre de 38° sur l'essieu avant et de 35° sur l'essieu arrière.

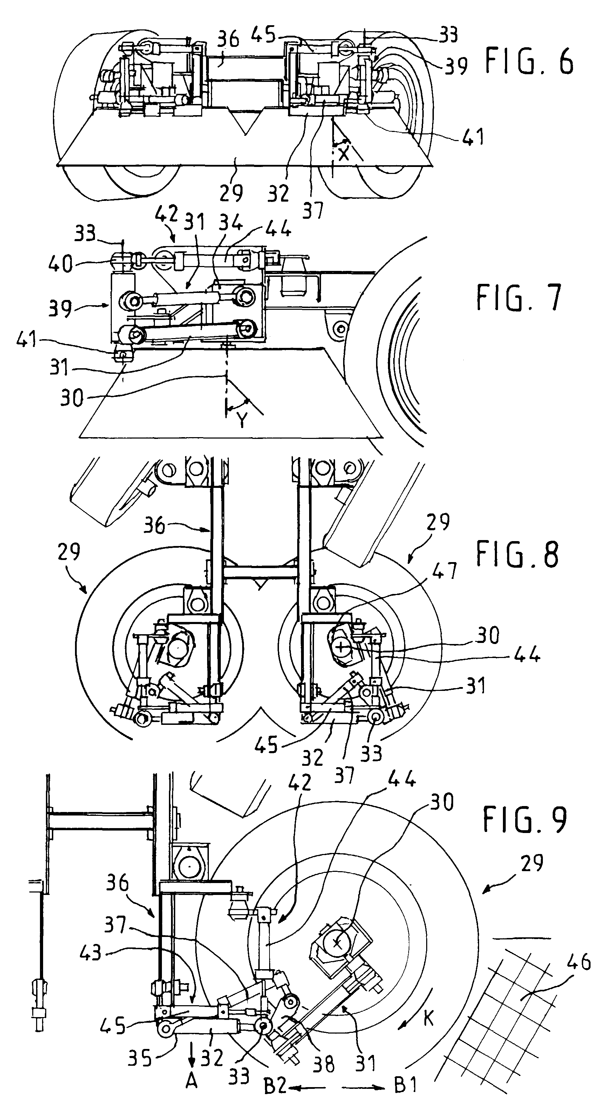

On se réfère maintenant aux figures 6 à 9.

On comprendra que la description qui suit est relative à un balai et à son système de commande et de réglage mais qu'une balayeuse comporte généralement deux ensembles symétriques de balayage.

De façon classique, un balai (19) formé d'une brosse rotative d'axe vertical (30) est porté par un système à un bras de levier (32) et à parallélogramme (31), articulés autour d'un axe vertical (33), l'extrémité (34) du parallélogramme (31) portant l'axe (30) du balai et son moteur d'entrainement (47), l'extrémité (35) du bras (32) étant fixée au châssis (36) de la balayeuse. Un vérin (37) simple effet et un renvoi (38) commandent le repli ou le blocage du balai (29) selon une flèche (B₂) perpendiculaire à la direction (A) de déplacement de la balayeuse, le balai tendant à s'écarter de lui-même selon la flèche (B1) en raison de son sens de rotation (K)

Conformément à l'invention, l'axe vertical (33) est monté sur un palier (39) à deux rotules à billes étanches.

La rotule inférieure (41) du palier (39) est solidarisée au châssis (36) par le bras support (35) fixé au châssis (voir figures 6,7).

La rotule supérieure (40) du palier (39) est portée par un système de réglage à deux bras perpendiculaires (42,43) fixés au châssis (36).

Selon une première variante de réalisation non représentée les bras de réglage (42,43) peuvent être des tiges filetées dont les longueurs réglables permettent un réglage latéral et un réglage frontal des balais.

Selon la deuxième variante de réalisation qui est représentée sur les figures 8,9, les bras de réglage (42,43) sont formés de vérins (44,45).

Le dispositif fonctionne comme suit :

La balayeuse se déplace selon la flèche (A). Le déplacement relatif des balais par rapport à la balayeuse est un mouvement transversal selon les flèches (B), il est provoqué par le vérin de commande (37) et sert à régler la largeur de balayage ou le lieu de balayage.

Le basculement longitudinal selon l'angle (Y) est donné par le vérin (44), il permet de régler l'angle d'attaque du balai pour que le balai ait une position correcte de balayage par rapport à la chaussée, c'est à dire pour que ledit balai touche le sol sur la moitié au moins de son périmètre dans le sens d'avancement.

Le basculement transversal selon l'angle (X) donné par le vérin (45) permet de régler l'inclinaison du balai pour suivre la courbure de la route, cette courbure pouvant aller jusqu'à 25° par exemple pour les caniveaux situés le long de trottoirs.

Grâce à cette structure, les réglages des angles d'inclinaison du balai selon les flèches (X et Y) sont totalement indépendants du mouvement transversal (B) des balais.

De plus, tout obstacle se rapprochant du balai (29) dans la zone (46) de balayage n'endommagera pas le système de balayage parce que le balai (29) fixé sur le pivot (33), tournant dans le sens (K) et qui est uniquement retenu dans le sens latéral externe (B 1) par le vérin de commande (37), génère toujours une force dans le sens (B₁) proportionnelle à la pression au sol exercée par le balai (29) et l'angle d'attaque, cette force étant de toute façon toujours inférieure à celle exercée par un obstacle.

Par ailleurs, le relevage du balai (29) peut être prévu non limitativement par un câble commandé par vérin à prise directe.

La repose constante du balai est garantie indépendamment de son usure par le système à parallélogramme à bras fixes (31). D'autres moyens de repose équivalents du balai peuvent être envisagés et les vérins de réglage (44,45) peuvent être remplacés par des versions mécaniques de réglage plus économiques.

Les avantages supplémentaires de cette variante sont notamment et non limitativement les suivants :
- système étanche graissé à vide,
- utilisation de composants de grande série bon marché,
- simplicité du montage,
- coût réduit,
- faible entretien,
- angle des balais constant indépendamment du mouvement des balais.

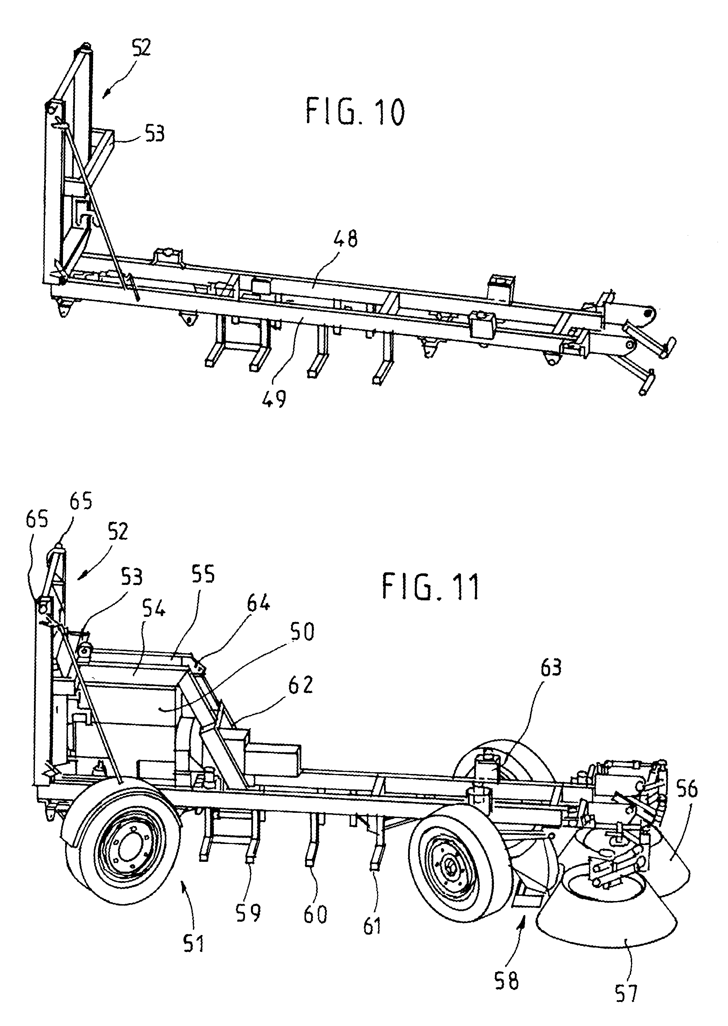

Un châssis tel que représenté en variante sur les figures 10 et 11 est formé de deux tubes (48,49) rectilignes sensiblement de même longueur que le véhicule et d'un cadre vertical (52) disposé à l'arrière.

Un moteur (50) est placé au-dessus d'un essieu arrière (51) et fixé sur ces deux tubes rectilignes (48,49). Le montant (62 et 53) est rigidifié par un dispositif démontable englobant le moteur. Le dispositif démontable formé de deux tubes (54,55) supports de cuve se termine par un étrier (62) englobant un bloc générateur hydraulique, et porte une butée de benne (64).

L'emplacement du moteur permet d'avoir une meilleure répartition des charges, une meilleure insonorisation phonique grâce à sa position haute, un châssis rectiligne.

Le cadre arrière (52) du châssis permet une vidange de la cuve située au-dessus du moteur. Le cadre maintient la benne lors du basculement et supporte les points pivots (65) permettant le bennage en élévation.

Deux balais (56,57) fixés classiquement à l'extrémité avant du châssis rassemblent les déchets vers l'embouchure (58) d'un tube d'aspiration non représenté passant entre les deux tubes (48,49) du châssis.

Un ensemble de pattes de fixation (59,60,61) sont prévues pour la fixation des différents réservoirs et quatre points (63) sont prévus pour la fixation de la cabine.

Le châssis selon cette variante a une largeur réduite par rapport à la largeur du cadre porte-benne (52) tout en conservant au véhicule ses caractéristiques antérieures.

## Revendications

1. Balayeuse urbaine automobile avec dispositif d'aspiration, balayeuse comportant une cuve à déchets (3) fermée par un plafond mobile (8), la turbine du dispositif d'aspiration étant d'axe vertical et montée en position inversée et encastrée dans une grille de filtration (4) solidarisée au plafond mobile (8), caractérisée en ce que la turbine est montée sur une pluralité de paliers hydrauliques (2) au-dessus de la cuve arrêtant les vibrations.

2. Balayeuse selon la revendication 1, caractérisée en ce que les paliers hydrauliques sont au nombre de trois.

3. Balayeuse selon l'une des revendications 1 à 2, caractérisée en ce que les paliers hydrauliques sont portés par des supports (11) solidaires de la cuve.

4. Balayeuse selon l'une quelconque des revendications 1 à 3, caractérisée en ce que la turbine est dans un logement (10).

5. Balayeuse selon la revendication 4, caractérisée en ce qu'un joint (9) réalise l'étanchéité entre la face d'aspiration de la turbine et la périphérie du logement (10).

6. Balayeuse selon l'une quelconque des revendications 1 à 5, caractérisée en ce que la grille (4) est solidarisée au plafond mobile (8).

7. Balayeuse selon l'une quelconque des revendications 1 à 6, caractérisée en ce qu'elle comporte un tuyau flexible (7) réalisant l'étanchéité en sortie soufflante (6) de la turbine.

8. Balayeuse selon l'une quelconque des revendications 1 à 7, comportant un dispositif à roues directrices avec un essieu avant (17) portant deux roues (13,14) reliées par un barre de direction (22) et un essieu arrière portant deux roues (15,16), reliées par une barre de direction (25), caractérisée en ce qu'elle comporte une barre de renvoi (21) transmettant le mouvement de braquage d'une roue avant (13) à une pièce de renvoi (20) montée à rotation sous un longeron (27) du châssis situé sur le côté opposé du véhicule par rapport à la roue (13), une barre de liaison (23) transmettant le mouvement à une autre pièce de renvoi (19) montée à rotation sous un autre longeron (26) du châssis situé de l'autre côté du véhicule par rapport au premier longeron (27), une barre de renvoi (24) transmettant le mouvement du renvoi (19) à la roue arrière située du côté opposé du véhicule par rapport au deuxième longeron (26).

9. Balayeuse selon la revendication 8, caractérisée en ce que toutes les barres sont montées sur pivot.

10. Balayeuse selon l'une quelconque des revendications 9 à 10, caractérisée en ce que chacun des deux essieux est suspendu par un moyen approprié.

11. Balayeuse selon l'une quelconque des revendications 1 à 10, comportant un dispositif de réglage des angles d'inclinaison d'un balai (29) à brosse rotative d'axe vertical (30), ledit balai (29) étant porté par un système à bras articulés autour d'un axe vertical (33), une extrémité (34) d'un système de support (31) portant l'axe du balai (30) et une extrémité (35) d'un bras (32) étant fixée au châssis (36) de la balayeuse, caractérisé en ce que ce dispositif de réglage agit sur l'axe d'articulation (33) du bras de levier (32) et du système de support du balai.

12. Balayeuse selon la revendication 11, caractérisée en ce qu'elle est composée d'une part d'un palier (39) à deux rotules (40,41) portant l'axe de pivotement (33), la rotule inférieure (41) étant solidarisée au bras (35) lié au châssis, la rotule supérieure (40) étant portée par un système à deux bras perpendiculaires (42,43) fixés au châssis (36) et réglables en longueur.

13. Balayeuse selon la revendication 12, caractérisée en ce que les bras réglables (42,43) sont des vérins (44,45).

14. Balayeuse selon l'une quelconque des revendications 11 à 13, caractérisée en ce que le système de support du balai est un système à parallélogramme.

15. Balayeuse urbaine automobile selon l'une quelconque des revendications 11 à 14 comportant au moins un balai à brosse rotative d'axe vertical, caractérisée en ce que ledit balai est équipé d'un dispositif de réglage selon l'une quelconque des revendications 12 à 15.

16. Balayeuse urbaine automobile selon l'une quelconque des revendications 1 à 15 du type constitué principalement d'un châssis, d'une cabine de conduite, d'une cuve de collecte des déchets fixée au châssis, d'une turbine d'aspiration, d'un moteur, caractérisée en ce que d'une part le châssis est formé de deux tubes rectilignes (48,49) et d'autre part en ce que le moteur (50) est fixé au-dessus de l'essieu arrière.

17. Balayeuse selon la revendication 16, caractérisée en ce que le moteur est fixé en trois points sur le châssis rectiligne.

## Patentansprüche

1. Selbstfahrende Stadtkehrmaschine mit Ansaugvorrichtung, bei der die Kehrmaschine einen von einem beweglichen Deckel (8) verschlossenen Abfallbehälter (3) hat und bei der die Turbine der Ansaugvorrichtung mit einer vertikalen Achse überkopf in einem Filtergitter (4) versenkt eingebaut ist, welches mit dem beweglichen Deckel (8) verbunden ist, **dadurch gekennzeichnet**, dass die Turbine auf einer Vielzahl von hydraulischen Lagern (2) oben auf dem Behälter montiert ist, welche die Schwingungen hemmen.

2. Kehrmaschine nach Anspruch 1, **dadurch gekennzeichnet**, dass eine Anzahl von drei hydraulischen Lagern vorgesehen ist.

3. Kehrmaschine nach einem der Ansprüche 1 bis 2, **dadurch gekennzeichnet**, dass die hydraulischen Lager von mit dem Behälter verbundenen Trägern (11) gehalten sind.

4. Kehrmaschine nach einem der Ansprüche 1 bis 3, **dadurch gekennzeichnet**, dass sich die Turbine in einer Aufnahme (10) befindet.

5. Kehrmaschine nach Anspruch 4, **dadurch gekennzeichnet**, dass eine Dichtung (9) die Dichtheit zwischen der Ansaugseite der Turbine und dem Rand der Aufnahme (10) ermöglicht.

6. Kehrmaschine nach einem der Ansprüche 1 bis 5, **dadurch gekennzeichnet,** dass das Gitter (4) an dem beweglichen Deckel (8) befestigt ist.

7. Kehrmaschine nach einem der Ansprüche 1 bis 6, **dadurch gekennzeichnet**, dass sie einen Schlauch (7) aufweist, der die Dichtheit des Gebläseauslasses (6) der Turbine ermöglicht.

8. Kehrmaschine nach einem der Ansprüche 1 bis 7, welche eine Vorrichtung mit gelenkten Rädern aufweist, die sowohl eine Vorderachse (17) hat, welche zwei Räder (13, 14) trägt, die durch eine Spurstange (22) miteinander verbunden sind, als auch eine Hinterachse aufweist, welche zwei Räder (15, 16) trägt, die durch eine Spurstange (25) miteinander verbunden sind, **dadurch gekennzeichnet**, dass sie eine Getriebestange (21) aufweist, welche die Lenkbewegungen eines Vorderrades (13) auf ein Getriebeteil (20) überträgt, das schwenkbar auf einem Längsträger (27) des Fahrgestells befestigt ist, der sich an der dem Rad (13) gegenüberliegenden Fahrzeugseite befindet, dass sie eine Verbindungsstange (23) hat, die die Bewegung auf ein weiteres Getriebeteil (19) überträgt, welches schwenkbar auf einem weiteren Längsträger (26) des Fahrgestells befestigt ist, der in Bezug auf den ersten Längsträger (27) auf der anderen Seite des Fahrzeugs liegt, und dass sie eine Getriebestange (24) hat, die die Bewegung des Getriebeteils (19) auf das Hinterrad überträgt, welches in Bezug auf den zweiten Längsträger (26) an der gegenüberliegenden Seite des Fahrzeugs liegt.

9. Kehrmaschine nach Anspruch 8, **dadurch gekennzeichnet**, dass alle Stangen auf Schwenkzapfen gelagert sind.

10. Kehrmaschine nach einem der Ansprüche 9 bis 10, **dadurch gekennzeichnet**, dass jede der beiden Achsen durch ein geeignetes Mittel gefedert ist.

11. Kehrmaschine nach einem der Ansprüche 1 bis 10, welche eine Vorrichtung zum Verstellen der Neigungswinkel eines Fegers (29) mit einer um eine vertikale Achse (30) drehbaren Bürste aufweist und bei der der genannte Feger (29) von einem System von Auslegern gehalten ist, die um eine vertikale Achse (33) schwenkbar sind, wobei ein Ende (34) eines Haltesystems (31) die Achse (30) des Fegers (29) trägt und ein Ende (35) eines Auslegers (32) am Fahrgestell (36) der Kehrmaschine befestigt ist, **dadurch gekennzeichnet**, dass die Verstellvorrichtung auf die Schwenkachse (33) des Armes des Auslegers (32) und das Haltesystem des Fegers wirkt.

12. Kehrmaschine nach Anspruch 11, **dadurch gekennzeichnet**, dass sie ein Lagerteil (39) mit zwei Kugelgelenken (40, 41) aufweist, welche die Schwenkachse (33) tragen, wobei das untere Kugelgelenk (41) an dem am Fahrgestell angeschlossenen Ausleger (32) befestigt ist und das obere Kugelgelenk (40) von einem System von zwei Auslegern (42, 43) getragen wird, die rechtwinklig zueinander am Fahrgestell (36) befestigt und in ihrer Länge verstellbar sind.

13. Kehrmaschine nach Anspruch 12, **dadurch gekennzeichnet**, dass die verstellbaren Ausleger (42, 43) Hubzylinder (44, 45) sind.

14. Kehrmaschine nach einem der Ansprüche 11 bis 13, **dadurch gekennzeichnet**, dass das Tragsystem des Fegers ein Parallelogrammsystem ist.

15. Selbstfahrende Stadtkehrmaschine nach einem der Ansprüche 11 bis 14, welche zumindest einen Feger mit einer um eine vertikale Achse drehbare Bürste aufweist, **dadurch gekennzeichnet**, dass der genannte Feger mit einer Verstellvorrichtung nach einem der Ansprüche 11 bis 14 ausgestattet ist.

16. Selbstfahrende Stadtkehrmaschine nach einem der Ansprüche 1 bis 15 einer Bauart, die grundsätzlich ein Fahrgestell, ein Fahrerhaus, einen auf dem Fahrgestell befestigten Behälter zum Sammeln von Abfällen, eine Ansaugturbine und einen Motor aufweist, **dadurch gekennzeichnet**, dass einerseits das Fahrgestell aus zwei geradlinigen Rohren (48, 49) besteht und andererseits der Motor (50) oberhalb der Hinterachse befestigt ist.

17. Kehrmaschine nach Anspruch 16, **dadurch gekennzeichnet**, dass der Motor an drei Punkten auf dem geradlinigen Fahrgestell befestigt ist.

## Claims

1. Urban motor sweeper having a suction device, the sweeper comprising a tank (3) for rubbish closed by a displaceable roof (8), the fan of the suction device having a vertical axis and being mounted in the inverted position and enclosed in a filter grille (4) integral with the displaceable roof (8), characterised in that the fan is mounted above the tank on a plurality of hydraulic bearings (2) which stop the vibrations.

2. Sweeper according to claim 1, characterised in that the hydraulic bearings are three in number.

3. Sweeper according to one of claims 1 to 2, characterised in that the hydraulic bearings are carried by supports (11) integral with the tank.

4. Sweeper according to any one of claims 1 to 3, characterised in that the fan is in a housing (10).

5. Sweeper according to claim 4, characterised in that a joint (9) forms the seal between the suction face of the fan and the periphery of the housing (10).

6. Sweeper according to any one of claims 1 to 5, characterised in that the grille (4) is made integral with the displaceable roof (8).

7. Sweeper according to any one of claims 1 to 6, characterised in that it comprises a flexible pipe (7) forming the seal at the blower outlet (6) of the fan.

8. Sweeper according to any one of claims 1 to 7, which comprises a device with steerable wheels, with a front axle (17) carrying two wheels (13, 14) connected by a steering bar (22) and a rear axle carrying two wheels (15, 16) connected by a steering bar (25), characterised in that it comprises a counter-bar (21), which transmits the deflection movement of a front wheel (13) to a counter-member (20), rotatably mounted under a strut (27) of the chassis situated on the opposite side of the vehicle relative to the wheel (13), a connecting bar (23) transmitting the movement to another counter-member (19), rotatably mounted under another strut (26) of the chassis situated on the other side of the vehicle relative to the first strut (27), and a counter-bar (24) transmitting the movement of the counter-member (19) to the rear wheel situated on the opposite side of the vehicle relative to the second strut (26).

9. Sweeper according to claim 8, characterised in that all of the bars are pivotally mounted.

10. Sweeper according to any one of claims 9 to 10, characterised in that each of the two axles is suspended by an appropriate means.

11. Sweeper according to any one of claims 1 to 10, comprising a device for adjusting the angles of inclination of a broom (29), which has a rotating brush on a vertical spindle (30), said broom (29) being carried by a system with arms articulated about a vertical spindle (33), one end (34) of a support system (31) carrying the spindle (30) of the broom, and one end (35) of an arm (32) being secured to the chassis (36) of the sweeper, characterised in that this adjustment device acts on the articulation spindle (33) of the lever arm (32) and of the support system for the broom.

12. Sweeper according to claim 11, characterised in that it includes, on the one hand, a bearing (39) with two ball-and-socket joints (40, 41) carrying the pivoting spindle (33), the lower ball-and-socket joint (41) being integral with the arm (35) connected to the chassis, and the upper ball-and-socket joint (40) being carried by a system with two perpendicular arms (42, 43) secured to the chassis (36) and adjustable in length.

13. Sweeper according to claim 12, characterised in that the adjustable arms (42, 43) are jacks (44, 45).

14. Sweeper according to any one of claims 11 to 13, characterised in that the support system for the broom is a parallelogram-type system.

15. Urban motor sweeper according to any one of claims 11 to 14, comprising at least one broom with a rotating brush on a vertical spindle, characterised in that said broom is provided with an adjustment device according to any one of claims 12 to 15.

16. Urban motor sweeper according to any one of claims 1 to 15, of the type mainly comprising a chassis, a driver's cab, a tank secured to the chassis for gathering rubbish, a suction fan and a motor, characterised in that, on the one hand, the chassis is formed from two rectilinear tubes (48, 49) and in that, on the other hand, the motor (50) is secured above the rear axle.

17. Sweeper according to claim 16, characterised in that the motor is secured at three points on the rectilinear chassis.
